# EUROPÄISCHE PATENTSCHRIFT

(11) **EP 1 308 371 B1**
(45) Veröffentlichungstag und Bekanntmachung des Hinweises auf die Patenterteilung: **21.03.2007**
(21) Anmeldenummer: 02023886.1
(22) Anmeldetag: 24.10.2002
(51) Int. Cl.: B62D 15/02

(54) **Verfahren und Vorrichtung zur Fassung der Ist-Stellung eines zu lenkenden Rades bei einem Flurförderzeug mit einer elektrischen Lenkung**
Method and device for obtaining the position of a steered wheel of an industrial truck with an electric power steering
Procédé et appareil pour determiner la position d'une roue directrice d'un chariot de manutention avec une direction assistée électrique

(30) Priorität: 02.11.2001 DE 10153915
(43) Veröffentlichungstag der Anmeldung: 07.05.2003
(73) Patentinhaber: Jungheinrich Aktiengesellschaft, 22047 Hamburg (DE)
(72) Erfinder: Claussen, Hans-Peter, 24576 Bad-Bramstedt (DE); Langlotz, Martin, 25365 Sparrieshoop (DE); Kramer, Dieter, 24558 Ulzburg (DE); Kohl, Sebastian, 24147 Klausdorf (DE); Herschel, Jan, 23843 Bad Oldesloe (DE); Krull, Hans-Friedrich, 25451 Quickborn (DE); Schuckert, Wolfgang, 22393 Hamburg (DE)
(74) Vertreter: Hauck, Graalfs, Wehnert, Döring, Siemons

(56) Entgegenhaltungen:
- EP-A- 1 013 537
- DE-A1- 19 532 903
- DE-C1- 19 714 786

## Beschreibung

Die Erfindung betrifft ein Verfahren und eine Vorrichtung zur Erfassung der Ist-Stellung eines zu lenkenden Rades bei einem Flurförderzeug mit einer elektrischen Lenkung.

Bei einer elektrischen Lenkung fehlt eine mechanische Verbindung zwischen Lenkwinkelgeber und dem zu lenkenden Rad. Eine Bewegung des Lenkwinkelgebers wird erfaßt und von einer Lenksteuerung in elektrische Signale für einen Lenkantrieb umgewandelt, der die Position des zu lenkenden Rades einstellt.

Aus DE 197 14 786 C1 ist eine Lenkeinrichtung bekannt, die mit einer ersten Erfassungseinrichtung das Ausmaß einer Bewegung des Lenkantriebs relativ zu einer Ausgangsposition ermittelt und mit einer zweiten Erfassungseinrichtung für mindestens eine Position des Lenkantriebs ein Referenzsignal erzeugt. Die erste Erfassungseinrichtung mißt die durchgeführten Umdrehungen eines Elektromotors ohne einen genauen Absolutwert für dessen Winkellage'zu bestimmen. Der Lenkantrieb weist einen Motor auf, dessen Abgangswelle mit einem Getriebe verbunden ist, das die Drehzahl des Motors übersetzt. Die Ausgangswelle des Getriebes ist mit einem Zahnrad versehen, das über eine Kette mit einem Zahnrad in Wirkverbindung steht, welches wiederum das zu lenkende Rad betätigt. Die zweite Erfassungseinrichtung besitzt einen Geber und einen Detektor. Der Geber ist an der Kette befestigt derart, daß er dem Detektor gegenübersteht, wenn das Rad in seiner Neutral- oder Geradeausposition steht. Wenn der Geber dem Detektor gegenübersteht, gibt der Detektor ein Referenzsignal an die Steuereinrichtung, die daraufhin den Lenkantrieb abgleichen kann. Bei der bekannten Lenkeinrichtung wird somit eine einzige Ist-Stellung des zu lenkenden Rades erfaßt.

Aus EP 1 013 537 A1 ist eine elektrische Lenkung mit einer Positionserfassungseinrichtung, gemäß dem Oberbegriff des Anspruchs 5, bekannt. Die Positionserfassungseinrichtung erfaßt die Geradeausposition eines zu lenkenden Rades sowie eine erste und eine zweite Endposition für den Lenkbereich. Die Erfassungseinrichtung besteht aus einer geschlitzten Scheibe, mit radial sich erstreckenden offenen und geschlossenen Abschnitten, die sich bei einer Bewegung des zu lenkenden Rades relativ zu einem Sensor bewegen. Die Scheibe ist dabei relativ zu dem Rad ausgerichtet, so daß die Abschnitte Referenzpositionen des Rades anzeigen. Um festzustellen, ob sich das scheibenförmige Elemente in einer der Referenzpositionen befindet, wird dieses zunächst um einen vorbestimmten Winkelbetrag in die eine Richtung gedreht. Bei dieser ersten Bewegung fühlt der Sensor, ob er auf einen Schlitz ausgerichtet ist oder ob er auf das volle Material ausgerichtet ist. Nachdem der vorbestimmte Winkelbereich durchfahren wurde, ändert sich die Drehrichtung und es wird erneut der vorbestimmte Winkelbereich durchfahren. Nachdem der Sensor seine Ausgangsstellung erreicht hat, wird die Drehbewegung um den Winkelbereich weiter fortgesetzt, so daß der Winkelbereich insgesamt in beiden Drehrichtungen überfahren wird. Aus der dabei auftretenden Abfolge von Signalen des Sensors, wird bestimmt, ob der Sensor sich zu Beginn in der Referenzposition befunden hat. Entsprechen die vom Sensor gefühlten Signale nicht der für eine der drei Referenzpositionen erwarteten Signalabfolge, so liegt keine Information über die Stellung des zu lenkenden Rades vor.

Eine weitere Erfassungseinrichtung für die absolute Position eines Lenkrades ist aus DE 195 32 903 bekannt, die die Übergänge zwischen unterschiedliech langen Winkelbereichen erfasst, jedoch ohne aktive Steuerung des Lenkrades arbeitet.

Der Erfindung liegt die Aufgabe zugrunde, ein Verfahren und eine Vorrichtung zur Erfassung der Ist-Stellung eines zu lenkenden Rades bei einer elektrischen Lenkung für ein Flurförderzeug zu schaffen, um mit einfachen Mitteln und einer großen Genauigkeit mehrere Ist-Stellungen für das zu lenkende Rad zu erfassen.

Die Aufgabe wird erfindungsgemäß durch ein Verfahren mit den Merkmalen aus Anspruch 1 gelöst.

Das Verfahren betrifft ein Flurförderzeug mit einem Lenkantrieb, der das Rad stellt und eine Drehbewegung des Lenkantriebes mißt. Der Lenkantrieb mißt seine Umdrehungen relativ zu einer Ausgangsposition. Ferner besitzt das Flurförderzeug eine Erfassungseinrichtung, die ein Codierelement mit mehreren Abschnitten und einem zum Codierelement ausgerichteten Sensor ausweist. Die Abschnitte verlaufen jeweils radial zur Radschwenkachse und besitzen jeweils eine andere Bogenlänge als die übrigen Abschnitte. Der auf das Codierelement gerichtete Sensor ist in der Lage, einen Übergang in und aus einem Abschnitt zu fühlen, wobei während einer Bewegung des Rades sich Codierelement und Sensor relativ zueinander bewegen. Hierbei ist entweder das Codierelement oder der Sensor fahrzeugfest gehalten und relativ zu dem zu lenkenden Rad ausgerichtet. Das erfindungsgemäße Verfahren weist als ersten Verfahrensschritt auf, daß das Rad in eine erste Drehrichtung gedreht wird, bis der Sensor einen Übergang erfaßt. Ansprechend auf den erfaßten Übergang wird das Rad in die entgegensetzte Richtung gedreht, bis erneut ein Übergang von dem Sensor erfaßt wird. Die Lenksteuerung bestimmt aus der zurückgelegten Winkelstrecke zwischen den beiden erfaßten Übergängen den Abschnitt auf dem Codierelement, der durch die beiden Übergänge begrenzt ist. Aufgrund der unterschiedlichen Bogenlänge der Abschnitte kann diese Zuordnung eindeutig von der Lenksteuerung vorgenommen werden. Aus dem erkannten Abschnitt des Codierelements bestimmt die Lenksteuerung, die Ist-Stellung des Rades.

Das erfindungsgemäße Verfahren besitzt eine Reihe von Vorteilen gegenüber den bekannten Verfahren. Zum einen ist es möglich, eine Vielzahl von unterschiedlichen Ist-Stellungen für das zu lenkende Rad zu erfassen. Das Verfahren ist keineswegs auf die Erfassung von drei Referenzpositionen beschränkt, wie das aus EP 1 013 537 bekannte Verfahren. Darüber hinaus besitzt das erfindungsgemäße Verfahren den Vorteil, daß das Rad nur um einen vergleichsweise kleinen Winkelbereich gedreht werden muß, um die Ist-Stellung zuverlässig zu erfassen. Darüber hinaus erhöht die Erfassung von zwei Übergängen die Genauigkeit der Positionsmessung.

In einer vorteilhaften Weiterführung des erfindungsgemäßen Verfahrens mißt der Sensor den Übergang von dem Abschnitt zu dem Codierelement. Es wird also durch die Drehbewegung in die erste und in die zweite Drehrichtung, die Bogenlänge eines Abschnittes auf dem Codierelement gemessen. Ist die Bogenlänge bekannt, so ist hierdurch der erfaßte Abschnitt bekannt und somit die Ist-Stellung des zu lenkenden Rades.

Um den zwischen den beiden Übergängen zurückgelegten Winkelbereich zu erfassen, wird in einer bevorzugten Ausgestaltung des Verfahrens der zwischen den beiden Übergängen zurückgelegte Winkelbereich von einem Winkelsensor des Lenkantriebs erfaßt. Hierzu kann bevorzugt ein Sensorlager in dem Motor des Lenkantriebs vorgesehen sein. Solche Sensorlager werden bereits für die Realisierung einer feldorientierten Regelung der Asynchronmaschine des Lenkantriebes eingesetzt und müssen somit nicht zusätzlich in dem Lenkantrieb vorgesehen werden.

Die erfindungsgemäße Aufgaben wird ebenfalls durch eine Vorrichtung mit den Merkmalen aus Anspruch 5 gelöst.

Die erfindungsgemäße Vorrichtung erfaßt die Ist-Stellung eines zu lenkenden Rades bei einer elektrischen Steuerung für ein Flurförderzeug. Die Vorrichtung ist dadurch gekennzeichnet, daß eine Lenksteuerung den Lenkantrieb zu einer Drehbewegung des Rades in einer ersten Richtung ansteuert und ansprechend auf einen ersten erfaßten Übergang den Lenkantrieb zu einer Drehbewegung in entgegengesetzter Richtung ansteuert bis erneut ein Übergang erfaßt wird. Der Lenkantrieb bestimmt den zwischen den beiden erfaßten Übergängen zurückgelegten Winkelbereich. Die Lenksteuerung ermittelt aus dem zurückgelegten Winkelbereich den durch die Übergänge begrenzten Bereich und somit die Ist-Stellung des Rades. Ist aufgrund des zurückgelegten Winkelbereichs bekannt, welcher Abschnitt von dem Sensor gefühlt wurde, so legt dieser aufgrund der Ausrichtung des fahrzeugfesten Codierelements oder des fahrzeugfesten Sensors, die Position des Rades fest. Die erfindungsgemäße Vorrichtung kann also mit der entsprechenden Lenksteuerung ohne großen Aufwand eingesetzt werden.

In einer bevorzugten Ausgestaltung ist der Sensor fahrzeugfest angeordnet. Das Codierelement ist vorzugsweise ringförmig ausgebildet. Die Abschnitte auf dem Codierelement sind als Ausnehmungen ausgebildet. Um einen möglichst großen Radius für die Ausbildung zu erzielen, können diese peripher an dem Codierelement angeordnet sein.

In einer bevorzugten Ausgestaltung besitzen die Übergänge von vollem Codierelement zur Ausnehmung entlang dem Umfang den gleichen Winkelabstand.

Es hat sich als zweckmäßig herausgestellt, insgesamt acht Ausnehmungen auf dem Codierelement vorzusehen. Zur leichteren Zuordnung der Abschnitte können die Abschnitte in einer Drehrichtung eine zunehmende Bogenlänge aufweisen. Die Bogenlänge der Abschnitte beträgt bevorzugt zwischen ungefähr 4,5° und 36°, um eine schnelle Erfassung der Ist-Stellung sicherzustellen. Bei einer Ausgestaltung mit einer zunehmenden Bogenlänge der Abschnitte nimmt diese um jeweils 4,5° zu. Eine bevorzugte Ausgestaltung einer elektrischen Lenkung besitzt ein ringförmiges Codierelement.

Ein bevorzugtes Ausführungsbeispiel wird anhand der Figuren erläutert. Es zeigt,
- Fig. 1: eine elektrische Lenkung in einer schematischen Ansicht und
- Fig. 2: ein ringförmiges Codierelement.

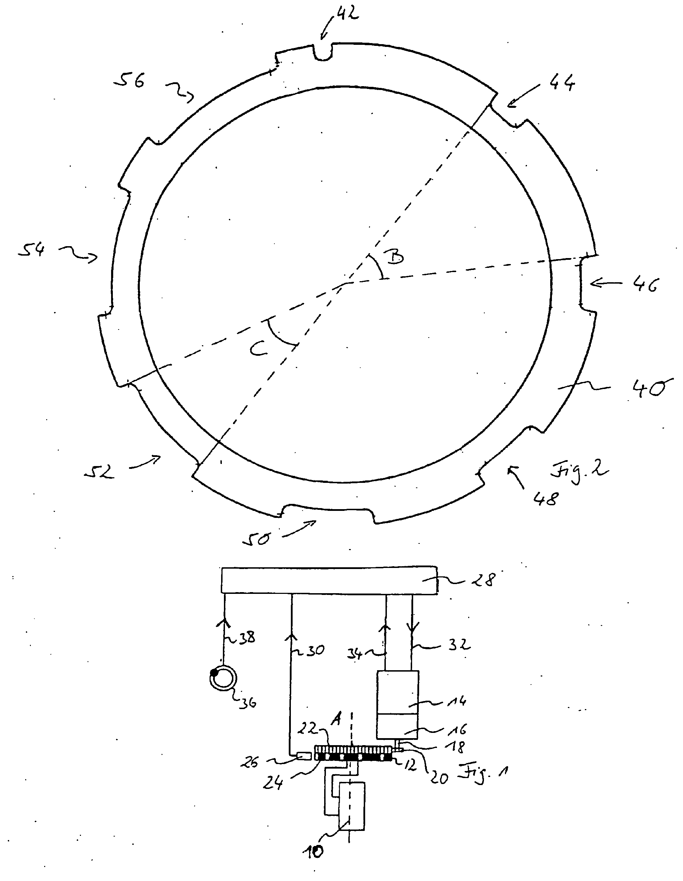

Fig. 1 zeigt eine schematische Ansicht einer elektrischen Lenkung für ein Flurförderzeug. Das zu lenkende Rad ist mit 10 bezeichnet und wird durch einen Drehschemel 12 gehalten. Der Drehschemel 12 ist um die mit A gekennzeichnete Schwenkachse des Rades drehbar gelagert. Angetrieben wird der Drehschemel über einen Elektromotor 14, dessen Abgangswelle in einem Getriebe 16 mündet. Das Getriebe 16 übersetzt eine Drehbewegung des Motors. Die Abgangswelle 18 des Getriebes 16 ist mit einem Zahnrad 20 versehen, das mit einem Zahnrad 22 auf dem Drehschemel zusammen wirkt.

Zur Übertragung einer Drehbewegung von dem Getriebe auf das Zahnrad 22 ist es ebenfalls möglich, einen Zahnriemen oder eine Kette einzusetzen.

Ein Codierring 24 ist in Fig.1 schematisch dargestellt. Der Codierring 24 ist an dem Drehschemel gehalten und relativ zu dem Rad 10 ausgerichtet.

In Fig. 1 schematisch dargestellt ist ein Näherungssensor 26, der berührungslos fühlt, ob das volle Codierelement oder eine Ausnehmung vorliegt. Die dargestellte Position des Berührungssensors ist lediglich beispielhaft, er kann auch oberhalb oder unterhalb der Codierscheibe 24 angeordnet sein.

Die in Fig. 1 dargestellte elektrische Lenkung besitzt eine Lenksteuerung 28, die über die Leitung 30 die Signale des Sensors 26 einliest und auswertet. Über die Leitung 32 gibt die Lenksteuerung Steuerbefehle an den Motor 14. Der Motor 14 besitzt ein Sensorlager. Dieses liefert zwei digitale Signale, die um 90° versetzt sind. Durch eine Vierfachauswertung können aus Lagern mit 64 Impulsen pro Kanal und pro Umdrehung insgesamt 256 Impulse gewonnen werden, was zu einer Auflösung von 1,41° führt. Durch eine Getriebeübersetzung zu dem zu lenkenden Rad von beispielsweise 1:200 wird eine relative Auflösung von 0,007° erreicht. Das Sensorlager ist bei der Ausführung einer feldorientierten Regelung der Asynchronmaschine des Lenkantriebs bereits vorgesehen und muß nicht extra eingebaut werden. Die Signale des Sensorlagers werden über die Leitung 34 an die Lenksteuerung angelegt.

Zur Bestimmung des Sollwerts für die Stellung des zu lenkendes Rades 10 ist in Fig. 1 ein Lenkrad 36 mit einer entsprechenden Verbindungsleitung 38 dargestellt.

Fig. 2 zeigt einen erfindungsgemäßen Codierring 40, der mit acht Ausnehmungen 42-56 versehen ist. Es ist auch eine beliebige andere Anzahl von Ausnehmungen möglich. Die Ausnehmungen besitzen in Uhrzeigersinn eine zunehmende Länge. Die Anordnung der Ausnehmungen auf dem Umfang des Codierrings ist hierbei so, daß stets der gleiche Winkelabstand für den Übergang vom Codierelement 40 zu der Ausnehmung vorliegt. In dem dargestellten Ausführungsbeispiel beträgt der Abstand zwischen dem Übergang von vollem Codierring zu einer Ausnehmung stets einen Winkel B, der in dem dargestellten Ausführungsbeispiel 45° beträgt. Mit dieser Aufteilung können insgesamt acht Ausnehmungen gleichmäßig auf dem Codierring angeordnet werden.

Jede der Ausnehmungen besitzt eine eindeutige Länge entlang dem Umfang des Codierrings, die eine Identifizierung der Ausnehmung zuläßt. In dem dargestellten Ausführungsbeispiel besitzt die Ausnehmung 42 eine Bogenlänge 4,5°, die Ausnehmung 44 von 9°. Die Erstreckung der nachfolgenden Ausnehmungen nimmt jeweils um 4,5° zu, so daß die Ausnehmung 46 eine Bogenlänge von 13,5° und die Ausnehmung 56 eine Bogenlänge von 36° besitzt. Der Winkel für die Bogenlänge ist zur besseren Übersicht beispielhaft für die Ausnehmung 52 in Fig. 1 eingezeichnet.

Zur Erkennung der Ist-Stellung des Rades wird die absolute Position des Codierrings 40 bestimmt. Hierzu wird der Codierring in einem ersten Schritt solange in die eine Richtung gedreht, bis der Näherungsschalter auf eine Ausnehmung in der Scheibe zeigt. Die Scheibe wird dann solange weiter gedreht, bis ein Übergang von Ausnehmung zur vollen Codierscheibe von dem Sensor erkannt wird. Die entsprechende Stellung des Sensorlagers wird in der Lenksteuerung 28 gespeichert. Der Codierring wird nachfolgend solange in die entgegengesetzte Richtung gedreht, bis wieder ein Übergang von Ausnehmung zu Metall gefühlt wird. Diese Stellung des Sensorlagers wird erneut abgespeichert. Die genaue Position der Scheibe kann aus den beiden abgespeicherten Werten bestimmt werden, die ergeben welche Ausnehmung von dem Sensor gefühlt wurde. Ist die Position der Ausnehmung bekannt, so ist für die beiden gespeicherten Stellungen des Sensorlagers die entsprechende Absolutposition bekannt. Beispielsweise kann zur Verbesserung der Genauigkeit durch Mittelwertbildung ein Referenzpunkt bestimmt werden. Die in Fig. 2 dargestellte Scheibe besitzt insgesamt acht solcher Referenzpunkt.

Ein besonderer Vorteil bei der erfindungsgemäßen Bestimmung der Referenzpunkte besteht darin, daß lediglich die Signaländerung bei Annäherung des Sensors von einer Aussparung zu dem vollen Codierring ausgewertet werden. Dadurch ist es möglich, Hystereseeffekte und Toleranzen im Schaltpunkt der Sensoren oder Ungenauigkeiten aufgrund des Abstandes des Sensors von dem Codierring zu eliminieren. Üblicherweise dienen die Näherungssensoren zur Positionsbestimmung bei einer axialen Annäherung an eine Fläche, wobei die Ansprechgenauigkeit unterschiedlich und nicht genau reproduzierbar ist. Verwendet man die Sensoren jedoch wie bei der vorliegenden Erfindung, um bei einer radialen Annäherung den Übergang von Aussparung zu vollem Material zu fühlen, so hat sich herausgestellt, daß bei einem definierten Abstand des Sensors eine sehr hohe Wiederholungsgenauigkeit der Schaltpunkte vorliegt. Die große Wiederholungsgenauigkeit liegt insbesondere dann vor, wenn der Übergang von Aussparung zu vollem Material erfaßt wird.

Besondere Vorteile der erfindungsgemäßen Ist-Winkelerfassung liegen auch darin, daß diese für eine 360°-fähige Lenkung eingesetzt werden können. Alternativ zu dem in Fig. 2 dargestellten ringförmigen Codierelement ist es ebenfalls möglich ein scheibenförmiges Codierelement einzusetzen.

## Patentansprüche

1. Verfahren zur Erfassung der Ist-Stellung eines zu lenkenden Rades (10) bei einer elektrischen Lenkung für ein Flurförderzeug, mit einem Lenkantrieb (14-20), der das Rad (10) stellt und eine Drehbewegung des Lenkantriebs mißt, und einer Erfassungseinrichtung, die ein Codierelement (24) mit mehreren Abschnitten (42-56), von denen jeder radial zur Radschwenkachse (A) verläuft und eine andere Bogenlänge (C) als jeder der übrigen Abschnitte besitzt, und die einen zum Codierelement ausgerichteten Sensor (26) aufweist, der einen Übergang zwischen einem der Abschnitte und dem Codierelement fühlt, wobei der Sensor fahrzeugfest gehalten ist und das Codierelement sich mit dem zu lenkenden Rad bewegt oder umgekehrt, das die folgenden Verfahrensschritte aufweist:
- für eine erste Drehrichtung wird das Rad gedreht, bis der Sensor einen ersten Übergang erfaßt,
- anschließend wird das Codierelement in die entgegengesetzte Richtung gedreht bis ein zweiter Übergang von dem Sensor erfaßt wird,
- aus der zurückgelegten Winkelstrecke des Lenkantriebs zwischen den beiden erfaßten Übergängen wird der durch die beiden Übergänge begrenzte Abschnitt und aufgrund der Ausrichtung des Codierelements und des Sensors relativ zu dem zu lenkenden Rad die Ist-Stellung des Rades bestimmt.

2. Verfahren nach Anspruch 1, **dadurch gekennzeichnet, daß** der Sensor Übergänge von einem der Abschnitte zu dem vollem Codierelement als erste und zweite Übergänge erfaßt.

3. Verfahren nach Anspruch 1 oder 2, **dadurch gekennzeichnet, daß** der Lenkantrieb mit einem Winkelsensor versehen ist, der die Drehbewegung des Lenkantriebs und den zwischen den gefühlten Übergängen zurückgelegten Winkelbereich mißt.

4. Verfahren nach einem der Ansprüche 1 bis 3, **dadurch gekennzeichnet, daß** die Ist-Stellung des Rades bei einem Einschalten des Flurförderzeuges erfaßt wird.

5. Vorrichtung zur Erfassung der Ist-Stellung eines zu lenkendes Rades (10) bei einer elektrischen Lenkung für ein Flurförderzeug, mit
- einem Lenkantrieb, der das Rad stellt und eine Drehbewegung des Lenkantriebes mißt, und
- einer Erfassungseinrichtung, die ein Codierelement mit mehreren Abschnitten und einen darauf gerichteten Sensor zu Erfassung von Übergängen zwischen einem der Abschnitte und dem Codierelement besitzt,
- wobei die Abschnitte radial zur Radschwenkachse (A) verlaufen und jeweils eine andere Bogenlänge (C) als die übrigen Abschnitte besitzen und der Sensor fahrzeugfest gehalten ist und das Codierelement sich mit dem Rad bewegt,
**dadurch gekennzeichnet, daß**
eine Lenksteuerung (28) den Lenkantrieb zu einer Drehbewegung des Rades in einer ersten Richtung ansteuert und ansprechend auf einen ersten von dem Sensor erfaßten Übergang den Lenkantrieb zu einer Drehbewegung in die entgegengesetzte Richtung ansteuert, bis ein zweiter Übergang von dem Sensor erfaßt wird,
der Lenkantrieb die zurückgelegte Winkelstrecke zwischen den beiden erfaßten Übergängen bestimmt und
die Lenksteuerung aus der Winkelstrecke den durch die beiden Übergänge begrenzten Abschnitt und aufgrund der Ausrichtung des Codierelements und des Sensors relativ zu dem zu lenkenden Rad die Ist-Stellung des Rades bestimmt.

6. Vorrichtung nach Anspruch 5, **dadurch gekennzeichnet, daß** das Codierelement (40) ringförmig ausgebildet ist.

7. Vorrichtung nach Anspruch 5 oder 6, **dadurch gekennzeichnet, daß** die Abschnitte auf dem Codierelement als vorzugsweise peripher angeordnete Ausnehmung (42-56) ausgebildet sind.

8. Vorrichtung nach Anspruch 7, **dadurch gekennzeichnet, daß** die Übergänge von Codierelement zu Ausnehmungen für jeden Abschnitt entlang dem Umfang den gleichen Winkelabstand (B) aufweisen.

9. Vorrichtung nach Anspruch 8, **dadurch gekennzeichnet, daß** insgesamt acht Ausnehmungen auf dem Codierelement vorgesehen sind.

10. Vorrichtung nach Anspruch 9, **dadurch gekennzeichnet, daß** die Ausnehmungen in einer Drehrichtung eine zunehmende Bogenlänge (C) aufweisen.

11. Vorrichtung nach Anspruch 10, **dadurch gekennzeichnet, daß** die Bogenlänge der Ausnehmung zwischen ungefähr 4° und 36° beträgt.

12. Vorrichtung nach Anspruch 11, **dadurch gekennzeichnet, daß** die Bogenlänge zweier benachbarter Abschnitte sich jeweils um ungefähr 4,5° unterscheidet.

## Claims

1. A method for obtaining the actual position of a wheel (10) to be steered with electric power steering for an industrial truck, having a steering drive (14 - 20), which sets the wheel (10) and measures rotary motion of the steering drive, and a detection instrument, which has an encoding element (24) with several sections (42 - 56), each of which runs radially to the swivelling axis (A) of the wheel, and an arc length (C) other than each of the remaining sections, and which has a sensor (26) aligned with the encoding element, which detects a transition between one of the sections and the encoding element, whereby the sensor is mounted on the truck and the encoding element moves with the wheel to be steered or vice versa, having the following procedural steps:
- for a first direction of rotation the wheel is turned until the sensor detects a first transition,
- the encoding element is then turned in the opposite direction until a second transition is detected by the sensor,
- the section delimited by both transitions is determined from the angle distance of the steering drive covered between both detected transitions, and the actual position of the wheel is determined on account of the alignment of the encoding element and of the sensor relative to the wheel to be steered.

2. The method as claimed in Claim 1, **characterised in that** the sensor detects transitions from one of the sections to the full encoding element as first and second transitions.

3. The method as claimed in Claim 1 or 2, **characterised in that** the steering drive is fitted with an angle sensor, which measures the rotary motion of the steering drive and the angular region covered between the felt transitions.

4. The method as claimed in any one of Claims 1 to 3, **characterised in that** the actual position of the wheel is detected when the industrial truck is switched on.

5. A device for detecting the actual position of a wheel (10) to be steered in the electric power steering for an industrial truck, with
- a steering drive, which sets the wheel and measures rotary motion of the steering drive, and
- a detection instrument, which has an encoding element with several sections and a sensor directed at the latter for detecting transitions between one of the sections and the encoding element,
- whereby the sections run radially to the swivelling axis (A) of the wheel and in each case have an arc length (C) other than the remaining sections and the sensor is held on the truck and the encoding element moves with the wheel, **characterised in that**
a steering control unit (28) activates the steering drive into rotary motion of the wheel in a first direction and, responding to a first transition detected by the sensor, activates the steering drive into rotary motion in the opposite direction, until a second transition is detected by the sensor,
the steering drive determines the angle distance covered between both detected transitions, and
from the angle distance the steering control unit determines the section delimited by both transitions and, on account of the alignment of the encoding element and of the sensor, determines the actual position of the wheel relative to the wheel to be steered.

6. The device as claimed in Claim 5, **characterised in that** the encoding element (40) is designed annular.

7. The device as claimed in Claim 5 or 6, **characterised in that** the sections on the encoding element are designed as a preferably peripherally arranged recess (42 - 56).

8. The device as claimed in Claim 7, **characterised in that** the transitions from encoding element to recesses for each section have the same angle distance (B) along the circumference.

9. The device as claimed in Claim 8, **characterised in that** there is a total of eight recesses provided on the encoding element.

10. The device as claimed in Claim 9, **characterised in that** the recesses have an increasing arc length (C) in the direction of rotation.

11. The device as claimed in Claim 10, **characterised in that** the arc length of the recess between is approximately 4° and 36°.

12. The device as claimed in Claim 11, **characterised in that** the arc length of two adjacent sections differs in each case by approximately 4.5°.

## Revendications

1. Procédé pour déterminer la position réelle d'une roue directrice (10) avec une direction assistée électrique pour un chariot de manutention, avec un entraînement de direction (14-20) qui positionne la roue (10) et mesure une rotation de l'entraînement de direction, et avec un dispositif de détection qui possède un élément de codage (24) avec plusieurs segments (42-56) dont chacun d'entre eux passe radialement par rapport à l'axe de pivotement de la roue (A) et possède une autre longueur d'arc (C) que tous les autres segments, et qui comporte un capteur (26) tourné vers l'élément de codage qui détecte une transition entre un des segments et l'élément de codage, le capteur étant fixé au véhicule et l'élément de codage étant mobile avec la roue directrice ou inversement, procédé qui comporte les étapes suivantes de procédé :
- dans un premier sens de rotation la roue tourne jusqu'à ce que le capteur détecte une première transition,
- ensuite, l'élément de codage tourne dans le sens contraire jusqu'à ce que le capteur détecte une seconde transition,
- à partir de la distance angulaire parcourue par l'entraînement de direction entre les deux transitions détectées est déterminé le segment délimité par les deux transitions et à partir de l'orientation de l'élément de codage et du capteur par rapport à la roue directrice est déterminée la position réelle de la roue.

2. Procédé selon la revendication 1, **caractérisé en ce que** le capteur détecte comme première et seconde transition les transitions depuis l'un des segments jusqu'à l'élément de codage plein.

3. Procédé selon la revendication 1 ou 2, **caractérisé en ce que** l'entraînement de direction est muni d'un capteur d'angle qui mesure la rotation de l'entraînement de direction et la zone angulaire parcourue entre les transitions détectées.

4. Procédé selon l'une des revendications 1 à 3, **caractérisé en ce que** la position réelle de la roue est détectée lors d'une mise en marche du chariot de manutention.

5. Appareil pour déterminer la position réelle d'une roue directrice (10) avec une direction assistée électrique pour un chariot de manutention, avec
- un entraînement de direction qui positionne la roue et qui mesure une rotation de l'entraînement de direction, et
- un dispositif de détection qui possède un élément de codage doté de plusieurs segments et un capteur orienté vers cela afin de détecter les transitions entre un des segments et l'élément de codage,
- étant précisé que les segments passent radialement par rapport à l'axe de pivotement de la roue (A) et qu'ils possèdent à chaque fois une autre longueur d'arc (C) que les autres segments et que le capteur est fixé sur le véhicule et l'élément de code est mobile avec la roue, **caractérisé en ce qu'**une commande de direction (28) commande à l'entraînement de direction d'effectuer une rotation de la roue dans un premier sens et en réponse à une première transition détectée par le capteur commande à l'entraînement de direction de tourner dans le sens contraire jusqu'à ce que le capteur détecte une seconde transition, et **en ce que** l'entraînement de direction détermine la distance angulaire parcourue entre les deux transitions détectées et la commande de direction détermine à partir de la distance angulaire le segment délimité par les deux transitions et la position réelle de la roue étant déterminée d'après l'orientation de l'élément de codage et du capteur par rapport à la roue directrice.

6. Appareil selon la revendication 5, **caractérisé en ce que** l'élément de codage (40) est conçu en forme d'anneau.

7. Appareil selon la revendication 5 ou 6, **caractérisé en ce que** les segments situés sur l'élément de codage sont réalisés comme creux (42-56) disposés de préférence sur la périphérie.

8. Appareil selon la revendication 7, **caractérisé en ce que** les transitions depuis l'élément de codage jusqu'aux creux comportent pour chaque segment situé le long de la périphérie la même distance angulaire (B).

9. Appareil selon la revendication 8, **caractérisé en ce qu'**au total huit creux sont prévus sur l'élément de codage.

10. Appareil selon la revendication 9, **caractérisé en ce que** les creux comportent dans un sens de rotation une longueur d'arc (C) croissante.

11. Appareil selon la revendication 10, **caractérisé en ce que** la longueur d'arc du creux est comprise entre 4° et 36° environ.

12. Appareil selon la revendication 10, **caractérisé en ce que** la longueur d'arc de deux segments voisins diffère à chaque fois de 4,5° environ.
